# FASCICULE DE BREVET EUROPEEN

(11) **EP 1 273 086 B1**
(45) Date de publication et mention de la délivrance du brevet: **15.12.2010**
(21) Numéro de dépôt: 01988967.4
(22) Date de dépôt: 24.10.2001
(51) Int. Cl.: H02K 3/32, H02K 3/50, H02K 15/12

(54) **MACHINE ELECTRIQUE TOURNANTE ET PROCEDE DE FABRICATION**
ELEKTRISCHE DREHMASCHINE UND VERFAHREN ZUR HERSTELLUNG DERSELBEN
ROTARY ELECTRIC MACHINE AND METHOD FOR MAKING SAME

(30) Priorité: 25.10.2000 FR 0013783
(43) Date de publication de la demande: 08.01.2003
(73) Titulaire: Michelin Recherche et Technique S.A., 1763 Granges-Paccot (CH)
(72) Inventeur: BOURQUI, Gérald, CH-1752 Villars-sur-Glane (CH); LINDA, Jean-Louis, CH-1635 La Tour-de-Treme (CH); MEUWLY, Roger, CH-1784 Cournillens (CH); TORNARE, Marcel, CH-1700 Fribourg (CH)
(74) Mandataire: Bauvir, Jacques
(86) Numéro de dépôt international: PCT/EP2001/012290
(87) Numéro de publication internationale: WO 2002/035685

(56) Documents cités:
- EP-A- 0 266 602
- EP-A- 0 660 336
- US-A- 3 710 437
- US-A- 3 874 073
- US-A- 4 128 527

## Description

La présente invention se rapporte aux machines électriques tournantes, moteurs ou générateurs, et plus précisément aux stators de celles-ci.

Dans une construction courante, le stator de telles machines comporte un circuit magnétique et des bobinages de fils conducteurs de l'électricité, réalisés en général en fil de cuivre isolé, souvent de section ronde. Le circuit magnétique quant à lui est feuilleté ; il est constitué par un empilage de tôles magnétiques. Chaque tôle est découpée de façon à aménager des encoches délimitées par des dents, les encoches étant le logement des fils conducteurs électriques. Ce principe d'agencement du stator est largement appliqué pour les machines synchrones ou asynchrones.

Il existe des applications pour lesquelles il est désirable d'atteindre à la fois des puissances importantes et une grande compacité du moteur. Pour donner simplement un exemple concret, lorsque l'on souhaite implanter des moteurs électriques de traction dans les roues de véhicules automobiles, il est souhaitable de pouvoir développer des puissances valant au moins 10 kW par moteur, et même la plupart du temps au moins 25 ou 30 kW par moteur, pour un poids le plus faible possible afin de ne pas trop alourdir les masses non suspendues. Il est également désirable que l'encombrement soit aussi très réduit, ne dépassant pas ou dépassant le moins possible du volume intérieur de la roue pour ne pas interférer avec les éléments du véhicule lors des débattements de suspension et lors d'autres types de mouvement de la roue par rapport à la caisse du véhicule.

Ces impératifs (puissance élevée, encombrement et poids faibles) rendent très problématique l'implantation de moteurs électriques de traction dans les roues de véhicules de tourisme, sauf à améliorer radicalement le rapport poids/puissance des machines électriques actuellement disponibles sur le marché.

Par ailleurs, il est nécessaire de contenir l'échauffement dû aux pertes des machines en deçà de certaines limites sous peine de provoquer des dégradations irréversibles, notamment à l'isolation des conducteurs électriques. Les calories produites dans les conducteurs du stator doivent donc être évacuées de manière aussi efficace que possible.

Dans les applications les plus exigeantes, il est déjà bien connu de refroidir les machines électriques tournantes au moyen d'un liquide. Dans ce cas, une circulation forcée du liquide est l'intérieur même de la machine électrique tournante, principalement le stator dans lequel se trouvent les bobinages électriques, afin de conduire les calories à l'extérieur vers un échangeur thermique.

Afin de bien maintenir mécaniquement les conducteurs électriques dans leurs encoches, de renforcer l'isolation électrique et aussi afin de contribuer à un bon échange thermique par conduction, il est déjà connu d'imprégner les conducteurs électriques dans de la résine qui remplit les différentes encoches et qui recouvre les chignons de part et d'autre du stator.

Par exemple, le document US 3 874 073 ainsi que le document US 4,128,527 proposent des compositions dont les particules sont de taille comprise entre 74 µm et 1400 µm, tout en indiquant que la taille de particules ne devrait pas être inférieure à 70 µm, faute de quoi la composition devient trop visqueuse. Quant au procédé d'imprégnation, le brevet US 3,710,437 propose de faire vibrer l'ensemble à imprégner.

Malheureusement, si l'imprégnation des conducteurs par la résine s'avère indispensable dans les moteurs à hautes performances, les résines utilisées pour imprégner les conducteurs dans les encoches sont des matériaux relativement mauvais conducteurs thermiques. Il est aussi connu d'utiliser, pour imprégner les conducteurs des chignons, des résines chargées, meilleures conductrices de la chaleur. Malheureusement, les résines utilisées dans les chignons ne conviennent pas pour l'imprégnation des conducteurs dans les encoches. Les charges ne peuvent pas pénétrer dans les faibles interstices restant libres dans les encoches, et ceci d'autant plus que, dans les moteurs performants, on cherche à atteindre un taux élevé de remplissage des encoches par du cuivre.

En outre, l'évacuation des calories engendrées dans les encoches est problématique. Il subsiste en effet couramment des défauts d'imprégnation, c'est-à-dire des bulles (air, produits de dégazage) qui restent emprisonnées à l'intérieur de la masse de conducteurs et résine. La conséquence en est que l'échange thermique à l'endroit où il y a ces défauts d'imprégnation est de bien moindre performance encore car il ne peut se faire par conduction. Il en résulte une élévation locale de la température, préjudiciable à la bonne tenue des isolants électriques utilisés, ayant pour conséquence des phénomènes de claquage thermique des machines électriques tournantes.

L'invention a pour objectif d'améliorer radicalement les performances thermiques des machines électriques tournantes. Elle a pour objectif de réaliser une imprégnation des conducteurs électriques dans les encoches bien plus homogène, de bien plus grande qualité. Elle a pour objectif de permettre l'imprégnation par une résine qui soit suffisamment bonne conductrice thermique. Ceci est tout particulièrement important si l'on veut élever le couple nominal d'une machine électrique tournante. A cette fin, on souhaite pouvoir injecter un courant le plus élevé possible. Il en résulte d'inévitables pertes par effet Joule, d'où des calories prenant naissance dans les conducteurs situés dans les encoches et dans les chignons et qu'il faut évacuer aussi efficacement que possible.

A cet effet, l'invention propose une machine électrique tournante présentant les caractéristiques des revendications indépendantes 1 et 2.

L'invention se rapporte à une machine électrique tournante comprenant un stator, le stator comprenant un circuit magnétique feuilleté comportant un empilage de tôles magnétiques disposées sensiblement parallèlement à un plan perpendiculaire à l'axe de rotation du rotor de la machine, le circuit magnétique comportant une pluralité de dents, les dents délimitant des encoches orientées longitudinalement, des fils conducteurs électriques étant disposés dans les encoches, le rapport de la somme des sections des carrés circonscrits tracés autour de la section de chaque fil conducteur à la section utile d'encoche étant pour chaque encoche supérieur à 0.7. Les fils électriques sont immobilisés dans les encoches par une composition d'imprégnation d'encoche contenant une résine thermodurcissable et une charge, ladite composition d'imprégnation d'encoche comportant au moins 65% en masse de ladite charge.

Le rapport indiqué ci-dessus dénote un taux de remplissage des encoches par les fils conducteurs très élevé. Il s'agit de construire des machines de forte puissance massique.

Sous un premier aspect, la granulométrie de la charge de la composition d'imprégnation d'encoche est telle que la taille moyenne des particules dont elle est constituée est inférieure à 15 µm environ, et est telle qu'au moins environ 80% en masse des particules ont une taille inférieure à 25 µm.

En fait, la caractérisation de la charge indiquée ci-dessus n'est pas indépendante du diamètre ou plus généralement de la taille de la section des fils conducteurs utilisés. Si la caractérisation indiquée est très bien adaptée à des fils dont le diamètre est de l'ordre de 1,2mm à 1,5mm, eux-mêmes bien adaptés à des machines de forte puissance massique concernées par l'invention, on peut aussi considérer que, sous un autre aspect, la granulométrie de la charge est telle que la taille maximale des particules dont elle est constituée est inférieure à 0.045*φ, avec φ étant le diamètre des fils conducteurs électriques disposés dans les encoches.

De préférence, la granulométrie de la charge est telle qu'au plus 3% en masse des particules ont une taille supérieure à 50 µm.

Cette charge est de préférence de la farine de silice (oxyde de silicium), du quartz (forme cristallisée de silice), du nitrure d'aluminium ou de l'alumine. On a découvert que ces charges, notamment lorsqu'elles sont mises en oeuvre selon le procédé ci-dessous, améliorent radicalement les performances d'une machine électrique.

On sait par ailleurs que le stator comporte des chignons aux deux extrémités axiales du circuit magnétique. L'invention s'étend aussi à une machine électrique tournante dans laquelle les conducteurs dans les chignons sont imprégnés par une composition d'imprégnation de chignon contenant une résine thermodurcissable et une charge de granulométrie plus élevée que la granulométrie de la charge de la composition d'imprégnation d'encoche.

Pour fixer les idées, la différence de granulométrie peut se qualifier par référence à la taille des particules et à la répartition entre différentes tailles. Par exemple, la charge de granulométrie élevée comporte de 30 à 55 % en masse environ de particules dont la taille est comprise entre 500 µm et 1000 µm ; elle comporte de 25 à 45 % en masse environ de particules dont la taille est comprise entre 200 µm et 600 µm, le solde étant constitué par au moins 5 % en masse de particules dont au moins 80% en masse ont une taille inférieure à 25 µm et de préférence inférieure à 20 µm environ et au plus 3% en masse ont une taille supérieure à 50 µm et de préférence à 45 µm environ.

De son côté, la charge de granulométrie moins élevée est caractérisée par une taille moyenne des particules inférieure à 15 µm environ et de préférence inférieure à 10 µm environ, et comporte au moins environ 80% en masse de particules dont la taille est inférieure à 25 µm et de préférence inférieure à 20 µm environ, et ne comporte environ pas plus de 3% en masse de particules dont la taille est supérieure à 50 µm et de préférence à 45 µm environ.

On a constaté qu'une telle charge permet d'améliorer la conductibilité thermique de la composition d'imprégnation d'encoche et que l'amélioration des propriétés de conductibilité thermique de la composition ne s'accompagne pas d'une augmentation préjudiciable de la viscosité de la composition.

De préférence, pour atteindre des valeurs de conductibilité thermique vraiment très importantes pour un matériau d'imprégnation d'encoche, ladite composition d'imprégnation d'encoche comporte au moins 70% en masse de ladite charge.

L'invention propose un procédé de fabrication d'un stator de machine électrique tournante, ledit stator comprenant un circuit magnétique feuilleté comportant un empilage de tôles magnétiques disposées sensiblement parallèlement à un plan perpendiculaire à l'axe de rotation du rotor de la machine, le circuit magnétique comportant une pluralité de dents, les dents délimitant des encoches orientées longitudinalement, le procédé comprenant les étapes suivantes :
- installer des fils électriques conducteurs dans les encoches et former des chignons aux deux extrémités axiales du circuit magnétique ;
- installer à axe vertical l'ensemble comportant le circuit magnétique supportant les conducteurs dans les encoches et les chignons ;
- imprégner sous vide les conducteurs dans les encoches avec une composition d'imprégnation d'encoche comportant une résine thermodurcissable et une charge ;
- procéder à la polymérisation de la composition.
Conformément à la revendication 14, l'invention propose un autre aspect du procédé décrit ci-dessus, comprenant les étapes suivantes :
- après avoir installé à axe vertical l'ensemble comportant le circuit magnétique supportant les conducteurs dans les encoches et les chignons et avant d'imprégner sous vide les conducteurs dans les encoches,
- imprégner le premier chignon, en position axialement supérieure, avec une composition d'imprégnation de chignon, comportant une résine thermodurcissable et une charge de granulométrie élevée ;
- retourner ledit ensemble et l'installer à nouveau à axe vertical, le premier chignon devenant le chignon inférieur ;
- imprégner sous vide les conducteurs dans les encoches avec une composition d'imprégnation d'encoche comportant une résine thermodurcissable et une autre charge de granulométrie plus faible que la granulométrie de la charge de la première composition ;
- imprégner le second chignon avec une composition d'imprégnation de chignon, comportant une résine thermodurcissable et une charge de granulométrie élevée ;
- procéder à la polymérisation desdites compositions.

Au dessin annexé,
la figure 1 est une coupe comprenant l'axe d'une machine tournante, illustrant une phase initiale du procédé illustrant l'invention ;
la figure 2 est une section partielle selon AA de la figure 1 ;
la figure 3 est une coupe comprenant l'axe de la machine tournante, illustrant une phase ultérieure du procédé selon l'invention ;
la figure 4 est une coupe comprenant l'axe de la machine tournante, illustrant une phase finale du procédé selon l'invention ;
la figure 5 est une coupe comprenant l'axe de la machine tournante, montrant le stator ainsi obtenu ;
la figure 6 est une coupe comprenant l'axe d'une machine tournante selon l'invention, montrant le stator et le rotor.

L'invention propose une composition d'imprégnation spécifique pour imprégner des conducteurs électriques en cuivre verni. On décrit ci-dessous l'application à l'imprégnation dans les encoches et l'imprégnation dans les chignons. Les compositions proposées comportent une résine thermodurcissable et divers adjuvants de mise en oeuvre. Quelques exemples non limitatifs sont donnés ci-dessous afin que l'exposé de l'invention soit complet. Cependant, l'invention ne portant pas en soi sur la résine, beaucoup de variantes peuvent être adoptées, l'homme du métier étant invité à aussi se reporter à l'état de la technique classique en ce qui concerne la résine.

La préparation de la composition d'imprégnation d'encoche peut se faire comme suit. Dans un premier exemple, on met en étuve une farine de silice (SIKRON B800, disponible chez Quarz Werke) pour la porter à 130°C. On prépare la formulation de résine époxy. On mélange 100 parts (en masse) de résine CY 179 avec 115 parts de durcisseur HY 917. On introduit 30 parts de flexibilisant DY040 et de 0.05 à 2 parts d'accélérateur DY070, selon la vitesse de réticulation souhaitée (tous les produits indiqués concernant la résine étant disponibles chez VANTICO). Ensuite, on amène cette composition à une température de 100°C et on ajoute quelques gouttes - c'est à dire environ de 0.05 à 0.10 parts- de BYK A501 (BYK-CHEMIE), additif antimoussant. On introduit progressivement 455 parts de charge dans 245 parts de résine, et on mélange jusqu'à obtention d'un liquide homogène tout en restant à température élevée. On dégaze sous vide le mélange final jusqu'à disparition des bulles. La composition obtenue comporte ainsi environ 65% en masse de charge et 35% en masse de résine. La composition d'imprégnation d'encoche est ainsi prête à être coulée. La charge utilisée est de granulométrie faible, de fluidité suffisante pour l'application visée, et garante d'une conductibilité thermique qui reste significative (de l'ordre de 0.9 W/mK).

Une autre composition d'imprégnation d'encoche peut être réalisée en utilisant comme charge de l'alumine ou oxyde d'aluminium (CL 4400 FG disponible chez ALCOA). On met en étuve l'alumine pour la porter à 140°C. Pour préparer la résine, on mélange 100 parts (en masse) de résine CY 179 avec 115 parts de durcisseur HY 917. On introduit 30 parts de flexibilisant DY040 (tous les produits indiqués ci-dessus étant disponibles chez VANTICO). On ajoute 6 parts d'additif dispersant BYK 9010 (BYK-CHEMIE), et quelques gouttes -c'est à dire environ 0.10 parts- d'additif antimousse (BYK A501 de BYK-CHEMIE). Ensuite, on amène cette composition à une température de l'ordre de 60°C à 70°C. On introduit rapidement 714 parts de charge dans 251 parts de résine, et on mélange jusqu'à obtention d'une suspension homogène utilisable pour l'imprégnation. On dégaze sous vide le mélange final jusqu'à disparition des bulles. La composition obtenue comporte ainsi environ 74% en masse d'alumine et 26% en masse de résine. La composition d'imprégnation d'encoche est ainsi prête à être coulée et supporte des températures de mise en oeuvre plus élevées (on peut la chauffer pour faciliter sa mise en oeuvre, sur un bobinage lui-même chauffé à environ 120°C). Après mise en oeuvre, on peut durcir cette composition par paliers à différentes températures supérieures à 140°C et jusqu'à 180°C. La conductibilité thermique obtenue est plus importante (de l'ordre de 1.6 W/mK).

L'utilisation de l'additif dispersant permet d'incorporer une part de charge assez importante, permettant lorsque l'on dépasse 70% d'élever significativement la conductibilité de la composition obtenue. On peut même atteindre une conductibilité de l'ordre de 2.0 W/mK en incorporant 80% d'alumine.

Augmenter dans la composition le pourcentage de charge favorise normalement l'augmentation de la conductibilité thermique, principalement si l'on dépasse un certain seuil. Mais cela augmente aussi la viscosité, ce qui peut rendre plus difficile la mise en oeuvre. La viscosité est un paramètre important car c'est la viscosité combinée à la température de mise en oeuvre qui va contribuer notamment au fait que la composition d'imprégnation est utilisable ou non. Il est à noter que le niveau de conductibilité dépend aussi de la régularité de la distribution de la charge dans la composition finale. Effectivement, augmenter (par l'utilisation d'un dispersant par exemple) la régularité de la distribution des particules de charge entraîne une diminution de la viscosité mais également de la conductibilité thermique. Dans cette optique, on a intérêt à ce que, toutes autres choses égales par ailleurs, la viscosité de la composition prête à être coulée soit à un niveau suffisamment élevé, qui reste compatible avec la phase d'imprégnation ultérieure qui va être décrite.

Dans l'exemple suivant, concernant toujours l'imprégnation d'encoche, on propose de préparer deux mélanges intermédiaires appelés mélanges A et B, tous les deux chargés avec l'alumine (CL 4400 FG) préalablement étuvée.

Le mélange A, préparé selon le mode opératoire indiqué au deuxième exemple ci-dessus, comporte les composants suivants : résine CY 179 (100 parts), agent flexibilisant DY 040 (30 parts), agent dispersant BYK 9010 (2.4 parts), additif anti-moussant BYK A501 (0.1 parts), charge CL 4400 FG (286 parts). La suspension est stockée dans un récipient approprié et on la laisse refroidir.

Le mélange B, préparé selon le mode opératoire indiqué au deuxième exemple ci-dessus, comporte les composants suivants : durcisseur HY 917 (115 parts), agent dispersant BYK 9010 (3.6 parts), additif anti-moussant BYK A501 (0.1 parts), charge CL 4400 FG (429 parts). La suspension est stockée dans un récipient approprié et on la laisse refroidir.

Le durcisseur et la résine n'étant pas mélangés, les mélanges A et B peuvent être stockés plusieurs jours et probablement beaucoup plus longtemps, sans dégradation préjudiciable. Pour préparer la composition d'imprégnation, on procède de la façon suivante :
1. Mettre en étuve les mélanges A et B entre 70°C et 80°C ;
2. Homogénéiser les suspensions ;
3. Peser les mélanges A (100 parts) et B (131 parts), les mélanger puis dégazer sous vide;

La résine d'imprégnation est ensuite mise en oeuvre à une température comprise entre 80°C et 100°C.

On donne ci-dessous un exemple de composition d'imprégnation de chignon. On utilise 308 parts d'alumine ou oxyde d'aluminium (CL 4400 FG disponible chez ALCOA) dont au moins 80% en masse des particules a une taille inférieure à 20 µm et au plus 3% en masse ont une taille supérieure à 45 µm, 617 parts d'alumine dont les particules ont une taille comprise entre 500 µm et 1000 µm, et 463 parts d'alumine dont les particules ont une taille comprise entre 200 µm et 600 µm. Pour préparer la résine, on mélange 100 parts (en masse) de résine CY 179 avec 115 parts de durcisseur HY 917. On introduit 30 parts de flexibilisant DY040 (tous les produits indiqués ci-dessus étant disponibles chez VANTICO). On ajoute environ 0.10 part d'additif antimousse (BYK A501 de BYK-CHEMIE). Ensuite, on amène cette composition à une température de l'ordre de 60°C à 70°C, on introduit la charge, préalablement chauffée à 140°C environ, dans la résine et on mélange jusqu'à obtention d'une suspension homogène utilisable. On dégaze sous vide le mélange final jusqu'à disparition des bulles. La composition obtenue comporte ainsi environ 85% en masse de charge et 15% en masse de résine. Après mise en oeuvre, on peut durcir cette composition par paliers à différentes températures supérieures à 140°C et jusqu'à 180°C. La conductibilité thermique obtenue est très élevée (de l'ordre de 4.0 W/mK).

En résumé, la composition d'imprégnation d'encoche comporte avantageusement au moins 65% de charge, et si l'on utilise une composition optimisée pour l'imprégnation des chignons, celle-ci comporte avantageusement au moins 85% de charge.

Les compositions indiquées se prêtent particulièrement bien à une parfaite imprégnation des conducteurs notamment par la mise en oeuvre des procédés décrits ci-dessous.

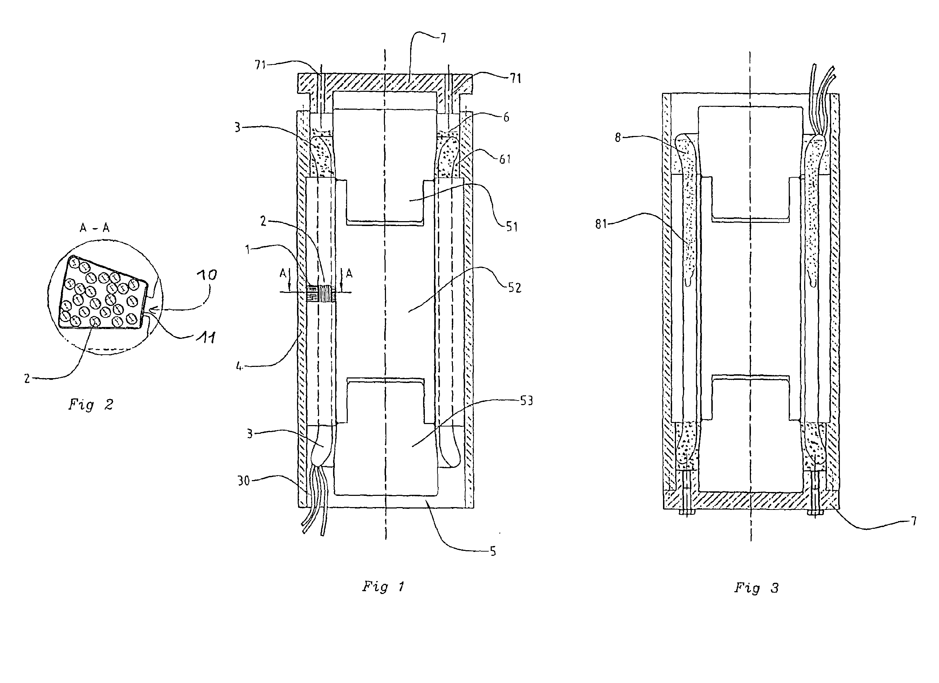

On voit notamment à la figure 1 un stator comprenant un circuit magnétique feuilleté 1 comportant un empilage de tôles magnétiques disposées sensiblement parallèlement à un plan perpendiculaire à l'axe. Le circuit magnétique comportant une pluralité de dents, les dents délimitant des encoches orientées longitudinalement, des fils conducteurs électriques 2 étant disposés dans les encoches. On voit également des chignons 3 aux extrémités du stator, ainsi que les sorties 30 de fils du bobinage à l'un des chignons. Soulignons que la figure 2 est seulement un schéma sur lequel on a représenté que quelques fils conducteurs électriques 2. Le nombre de fils conducteurs électriques 2 que l'on y voit n'est pas représentatif du taux de remplissage d'encoche très élevé caractéristique de l'invention. A ce propos, notons encore que la section utile de l'encoche pour installer des fils de cuivre est la section géométrique de l'espace de ladite encoche à laquelle on a retranché la section occupée par d'autres éléments éventuellement installés dans l'encoche, tel qu'une feuille isolante 11 recouvrant les parois intérieures des encoches. La section utile correspond à la surface de la section limitée par la feuille isolante 11, la section de celle-ci n'étant pas comprise dans la section utile. Dans le cas, très courant, où les fils conducteurs électriques 2 ont une section circulaire, le carré circonscrit tracé autour de la section de chaque fil conducteur est un carré dont le côté vaut le diamètre du fil conducteur électrique 2. Soit S1 la somme des sections des carrés circonscrits tracés autour de la section de chaque fil conducteur. Soit S2 la section utile. Le rapport S1/S2 permet de quantifier le taux de remplissage des encoches par les fils conducteurs. On a indiqué ci-dessus qu'il est très élevé.

L'ensemble comportant le circuit magnétique 1 supportant les conducteurs 2 et les chignons 3 est, avant la première étape d'imprégnation, emprisonné entre un fourreau extérieur 4 faisant partie du moteur final, et un noyau intérieur amovible 5, ici en trois parties 51, 52, 53, occupant sensiblement le volume à réserver pour le rotor. Bien entendu, le noyau 5 est revêtu d'une composition de démoulage parce qu'il devra être démonté.

Comme on le voit à la figure 1, avant d'imprégner le chignon supérieur, on installe à axe vertical l'ensemble comportant le circuit magnétique supportant les conducteurs et les chignons. Les sorties de fils 30 sont du côté inférieur. On procède à l'imprégnation du premier chignon, en position axialement supérieure, avec une composition 6 d'imprégnation de chignon, dont la charge 61 est de granulométrie élevée. La composition a une conductibilité thermique très élevée, de préférence supérieure à 3 W/mK et avantageusement supérieure à 4 W/mK. On peut utiliser une composition d'imprégnation proposée ci-dessus comme composition d'imprégnation de chignon. Un autre exemple d'une composition utilisable, disponible cette fois dans le commerce, est la composition vendue sous la dénomination « STYCAST 2850 KT » (disponible chez EMERSON & CUMING).

Ensuite, on obture l'extrémité axiale du côté du chignon 3 déjà imprégné au moyen d'un obturateur 7 comportant des évents 71. De préférence, on aura introduit une quantité de composition d'imprégnation de chignon telle que la composition remonte légèrement dans les évents. On obture ensuite les évents.

Ensuite, on retourne ledit ensemble et on l'installe à nouveau à axe vertical, le premier chignon devenant le chignon inférieur (voir figure 3).

Le coulage de la composition 8 d'imprégnation d'encoche contenant une charge 81 est effectué sous vide, sur des bobinages préalablement chauffés à une température d'environ 100°C, afin de favoriser l'imprégnation par une viscosité abaissée. De préférence, pendant l'imprégnation des conducteurs dans les encoches, on introduit la quantité totale de composition d'imprégnation d'encoche par fractions successivement, par exemple en deux ou trois fois, avec après chaque fraction, une phase de retour progressif à la pression atmosphérique, voire élévation à une pression supérieure à la pression atmosphérique, et retour au vide. Une alternance de phases d'élévation de pression et retour au vide pour introduire chaque fraction favorise une grande homogénéité de l'imprégnation. Ainsi, la machine électrique tournante est bien moins sujette à des claquages thermiques lorsqu'elle est sollicitée de façon importante. De préférence, on aura introduit une quantité totale de composition d'imprégnation d'encoche telle que la composition déborde légèrement dans le chignon supérieur.

Avant de poursuivre l'imprégnation, on retire éventuellement l'excès de composition d'imprégnation d'encoche présent dans le second chignon et on procède éventuellement à une polymérisation au moins partielle de la composition d'imprégnation d'encoche pour éviter que celle-ci, de densité plus faible que celle qui sera utilisée pour imprégner le second chignon, ne se mélange avec la composition d'imprégnation du second chignon.

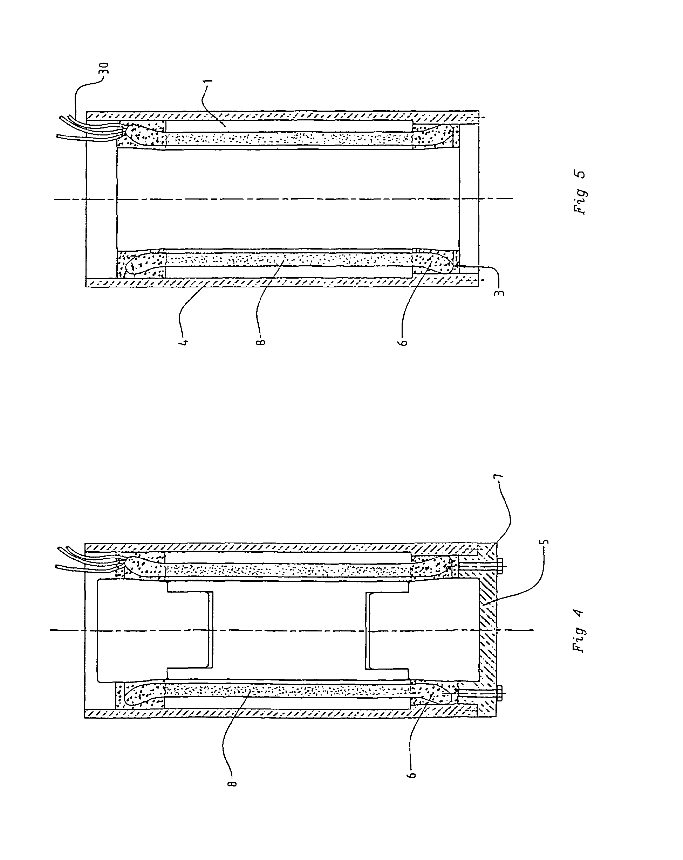

On procède ensuite à l'imprégnation du second chignon (voir figure 4) avec une composition d'imprégnation de chignon, de préférence au moyen de la même composition 6 d'imprégnation de chignon que celle utilisée pour le premier chignon. On démonte ensuite le noyau 5 et on obtient ce qui est représenté à la figure 5, à savoir un stator prêt à recevoir un rotor, des flasques aux extrémités axiales, des connecteurs, et éventuellement d'autres éléments auxiliaires comme un circuit de refroidissement.

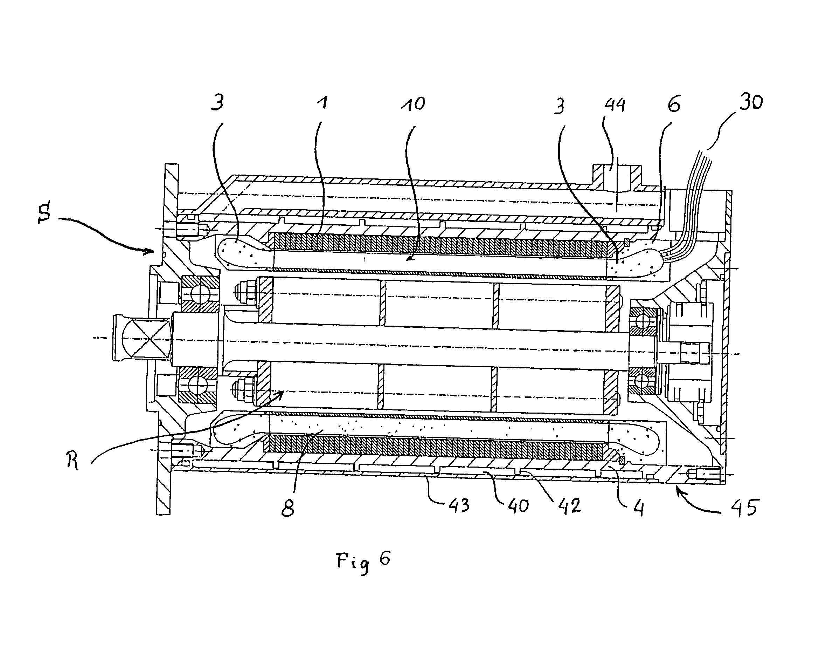

A la figure 6, on voit une machine électrique tournante comprenant un stator S et un rotor R monté à l'intérieur du stator S. C'est la disposition constructive la plus courante pour les machines électriques, mais cette disposition est bien entendu non limitative à l'égard de l'invention. Le stator S comprenant un circuit magnétique feuilleté 1. Le stator comporte des chignons 3 aux deux extrémités axiales du circuit magnétique. Le fourreau 4 est réalisé en une matière métallique et constitue, au moins en partie, la carapace extérieure 45 protégeant les organes électriques, assurant la tenue mécanique du moteur. Un circuit 40 destiné à faire circuler un liquide de refroidissement est aménagé dans le fourreau 4. A cette fin, le fourreau 4 comporte à sa surface extérieure un filet 42. Une chemise extérieure 43 est montée autour du fourreau 4. Le circuit 40 forme un serpentin. On voit un des orifices 44 permettant de raccorder le moteur à une source de fluide de refroidissement. Pour certaines applications, il est possible d'utiliser la composition d'imprégnation d'encoche pour l'imprégnation totale d'un stator, y compris les chignons. Dans ce cas, l'étape d'imprégnation sous vide des conducteurs dans les encoches, décrite avec référence à la figure 3, permet l'imprégnation totale, cette étape commençant par imprégner le chignon inférieur, puis les encoches, et enfin le chignon supérieur, avec la même composition d'imprégnation. Certaines compositions d'encoches proposées par la présente invention ont une conductibilité thermique suffisamment élevée pour cela, même si des compositions spécifiques pour une imprégnation de chignon peuvent avoir une conductibilité thermique supérieure. L'invention permet d'atteindre de tels niveaux de conductibilité pour une composition compatible avec une imprégnation des fils conducteurs dans les encoches que l'on peut utiliser une seule composition chargée pour l'ensemble du stator, ce qui simplifie la fabrication.

On a comparé les performances d'un stator réalisé au moyen de la composition d'imprégnation d'encoche décrite et selon le procédé d'imprégnation qui vient d'être décrit aux performances d'un moteur qui utilise pour les encoches, une résine non chargée identique à celle de la composition d'imprégnation d'encoche décrite ci-dessus, et la même composition d'imprégnation de chignon. Pour un régime de fonctionnement identique, proche d'une charge maximale du moteur, on observe que les diminutions de température maximale atteinte sont de l'ordre de 20°C à 25°C dans les chignons, preuve d'une augmentation très significative de la conduction par les encoches puisque la composition d'imprégnation de chignon est identique, et de l'ordre de 25°C à 30°C dans les encoches. Ainsi, on obtient un gain indirect dû au fait que la température de fonctionnement ayant été abaissée de façon substantielle, la résistance électrique des bobinages est légèrement diminuée, ce qui provoque une légère amélioration du rendement de la machine électrique tournante.

Si l'on admet une température maximale de fonctionnement inchangée, il en résulte que l'on peut augmenter l'intensité de courant passant dans les bobinages, donc on peut augmenter la puissance de la machine.

L'invention peut être utilisée indifféremment pour réaliser des moteurs électriques ou bien des alternateurs. Afin d'améliorer encore la compacité du moteur, on peut prévoir que le stator comporte une canalisation pour la circulation d'un fluide de refroidissement, par exemple un liquide de refroidissement du genre de ceux utilisés pour le refroidissement des moteurs thermiques des véhicules automobiles.

## Revendications

1. Machine électrique tournante comprenant un stator, le stator comprenant un circuit magnétique feuilleté (1) comportant un empilage de tôles magnétiques disposées sensiblement parallèlement à un plan perpendiculaire à l'axe de rotation du rotor de la machine, le circuit magnétique comportant une pluralité de dents, les dents délimitant des encoches orientées longitudinalement, des fils conducteurs électriques étant disposés dans les encoches, le rapport de la somme des sections des carrés circonscrits tracés autour de la section de chaque fil conducteur à la section utile d'encoche étant pour chaque encoche supérieur à 0.7, les fils d'encoche étant immobilisés par une composition (8) d'imprégnation d'encoche contenant une résine thermodurcissable et une charge (81), de granulométrie telle que la taille moyenne des particules dont elle est constituée est inférieure à 15 µm environ, et telle qu'au moins environ 80% en masse des particules ont une taille inférieure à 25 µm, ladite composition d'imprégnation d'encoche comportant au moins 65% en masse de ladite charge.

2. Machine électrique tournante comprenant un stator, le stator comprenant un circuit magnétique feuilleté (1) comportant un empilage de tôles magnétiques disposées sensiblement parallèlement à un plan perpendiculaire à l'axe de rotation du rotor de la machine, le circuit magnétique comportant une pluralité de dents, les dents délimitant des encoches orientées longitudinalement, des fils conducteurs électriques étant disposés dans les encoches, le rapport de la somme des sections des carrés circonscrits tracés autour de la section de chaque fil conducteur à la section utile d'encoche étant pour chaque encoche supérieur à 0.7, les fils d'encoche étant immobilisés par une composition (8) d'imprégnation d'encoche contenant une résine thermodurcissable et une charge (81) de granulométrie telle que la taille maximale des particules dont elle est constituée est inférieure à 0.045*φ, avec φ étant le diamètre des fils conducteurs électriques (2) disposés dans les encoches, ladite composition d'imprégnation d'encoche comportant au moins 65% en masse de ladite charge.

3. Machine selon l'une des revendications 1 ou 2, dans laquelle la granulométrie de la charge (81) est telle qu'au plus 3% en masse des particules ont une taille supérieure à 50 µm.

4. Machine selon l'une des revendications 1 à 3, dans laquelle ladite composition d'imprégnation d'encoche comporte au moins 70% en masse de ladite charge.

5. Machine selon l'une des revendications 1 à 4, dans laquelle la charge de la composition d'imprégnation d'encoche est choisie dans le groupe constitué par la farine de silice, le quartz , le nitrure d'aluminium et l'alumine.

6. Machine selon l'une des revendications 1 à 5, dans laquelle la granulométrie de la charge de la composition (8) d'imprégnation d'encoche est telle que la taille moyenne des particules est inférieure à 10 µm environ, et est telle qu'au moins environ 80% en masse des particules ont une taille inférieure à 20 µm.

7. Machine selon la revendication 6, dans laquelle la granulométrie de la charge de la composition (8) d'imprégnation d'encoche est telle qu'environ pas plus de 3% en masse de particules ont une taille supérieure à 45 µm.

8. Machine selon l'une des revendications 1 à 7, comportant des chignons (3) aux deux extrémités axiales du circuit magnétique, les conducteurs dans les chignons étant imprégnés par une composition (6) d'imprégnation de chignon contenant une résine thermodurcissable et une charge (61) de granulométrie plus élevée que la granulométrie de la charge de la composition d'imprégnation d'encoche.

9. Machine selon la revendication 8, dans laquelle la granulométrie de la charge de la composition d'imprégnation de chignon est telle qu'elle comporte de 30 à 55 % en masse environ de particules dont la taille est comprise entre 500 µm et 1000 µm, comporte de 25 à 45 % en masse environ de particules dont la taille est comprise entre 200 µm et 600 µm, le solde étant constitué par au moins 5 % en masse de particules dont au moins 80% en masse ont une taille inférieure à 25 µm et au plus 3% en masse ont une taille supérieure à 50 µm.

10. Machine selon la revendication 9, dans laquelle la granulométrie de la charge de la composition d'imprégnation de chignon est telle qu'elle comporte un solde constitué par au moins 5 % en masse de particules dont au moins 80% en masse ont une taille inférieure à 20 µm et au plus 3% en masse ont une taille supérieure à 45 µm.

11. Machine selon l'une des revendications 1 à 10, dans laquelle le circuit magnétique feuilleté (1) est monté à l'intérieur d'un fourreau (4) réalisé en matière métallique.

12. Procédé de fabrication d'un stator de machine électrique tournante, ledit stator comprenant un circuit magnétique feuilleté comportant un empilage de tôles magnétiques disposées sensiblement parallèlement à un plan perpendiculaire à l'axe de rotation du rotor de la machine, le circuit magnétique comportant une pluralité de dents, les dents délimitant des encoches orientées longitudinalement, comprenant les étapes suivantes :
- installer des fils électriques conducteurs dans les encoches et former des chignons aux deux extrémités axiales du circuit magnétique ;
- installer à axe vertical l'ensemble comportant le circuit magnétique supportant les conducteurs dans les encoches et les chignons ;
- imprégner sous vide les conducteurs dans les encoches avec une composition d'imprégnation d'encoche comportant une résine thermodurcissable et une charge ;
- procéder à la polymérisation de la composition.

13. Procédé selon la revendication 12, dans lequel l'étape d'imprégnation sous vide des conducteurs dans les encoches permet d'effectuer l'imprégnation des conducteurs dans les chignons avec la même composition d'imprégnation.

14. Procédé de fabrication d'un stator de machine électrique tournante selon l'une des revendications 12 ou 13, comprenant les étapes suivantes :
- après avoir installé à axe vertical l'ensemble comportant le circuit magnétique supportant les conducteurs dans les encoches et les chignons et avant d'imprégner sous vide les conducteurs dans les encoches, imprégner le premier chignon, en position axialement supérieure, avec une composition d'imprégnation de chignon comportant une résine thermodurcissable et une charge de granulométrie élevée ;
- retourner ledit ensemble et l'installer à nouveau à axe vertical, le premier chignon devenant le chignon inférieur ;
- imprégner sous vide les conducteurs dans les encoches avec une composition d'imprégnation d'encoche comportant une résine thermodurcissable et une autre charge de granulométrie plus faible que la granulométrie de la charge de la première composition ;
- imprégner le second chignon avec une composition d'imprégnation de chignon, comportant une résine thermodurcissable et une charge de granulométrie élevée ;
- procéder à la polymérisation desdites compositions.

15. Procédé selon la revendication 14 dans lequel, avant l'imprégnation du second chignon, on effectue une étape de polymérisation au moins partielle d'au moins la composition d'imprégnation d'encoche.

16. Procédé selon l'une des revendications 12 à 15, pour un stator de machine dont le rotor est monté à l'intérieur du stator, dans lequel l'ensemble comportant le circuit magnétique supportant les conducteurs dans les encoches et les chignons est, avant la première étape d'imprégnation, emprisonné entre un fourreau extérieur faisant partie du moteur final et un noyau intérieur amovible occupant sensiblement le volume à réserver pour le rotor.

17. Procédé selon l'une des revendications 12 à 16 dans lequel, pendant l'imprégnation des conducteurs dans les encoches, on introduit sous vide la quantité totale de composition d'imprégnation d'encoche par fractions successivement, et après chaque fraction, on ramène le stator à la pression atmosphérique.

18. Procédé selon l'une des revendications 12 à 16 dans lequel, pendant l'imprégnation des conducteurs dans les encoches, on introduit sous vide la quantité totale de composition d'imprégnation d'encoche par fractions successivement, et après chaque fraction, le stator est soumis à une pression supérieure à la pression atmosphérique.

## Claims

1. An electrical rotating machine comprising a stator, the stator comprising a laminated magnetic circuit (1) having a stack of magnetic metal sheets disposed substantially parallel to a plane perpendicular to the axis of rotation of the rotor of the machine, the magnetic circuit having a plurality of teeth, the teeth delimiting longitudinally oriented slots, electrically conductive wires being disposed in the slots, the ratio of the sum of the sections of the squares circumscribing the section of each conductive wire to the useful slot section being greater than 0.7 for each slot, the slot wires being kept immobile by a slot-impregnating composition (8) containing a heat-setting resin and a filler (81) of particle size such that the average size of the particles whereof it is composed is less than approximately 15 µm and such that at least approximately 80% by mass of the particles are less than 25 µm in size, the said slot-impregnating composition comprising at least 65% by mass the said filler.

2. An electrical rotating machine comprising a stator, the stator comprising a laminated magnetic circuit (1) having a stack of magnetic metal sheets disposed substantially parallel to a plane perpendicular to the axis of rotation of the rotor of the machine, the magnetic circuit having a plurality of teeth, the teeth delimiting longitudinally oriented slots, electrically conductive wires being disposed in the slots, the ratio of the sum of the sections of the squares circumscribing the section of each conductive wire to the useful slot section being greater than 0.7 for each slot, the slot wires being kept immobile by a slot-impregnating composition (8) containing a heat-setting resin and a filler (81) of particle size such that the maximum size of the particles whereof it is composed is less than 0.045*φ, where φ is the diameter of the electrically conductive wires (2) disposed in the slots, the said slot-impregnating composition comprising at least 65% by mass the said filler.

3. A machine according to one of Claims 1 or 2, in which the particle size of the filler (81) is such that at most 3% by mass of the particles are above 50 µm in size.

4. A machine according to one of Claims 1 to 3, in which the said slot-impregnating composition comprises at least 70% by mass the said filler.

5. A machine according to one of Claims 1 to 4, in which the filler of the slot-impregnating composition is selected from the group comprising silica flour, quartz, aluminium nitride and alumina.

6. A machine according to one of Claims 1 to 5, in which the particle size of the filler of the slot-impregnating composition (8) is such that the average size of the particles is less than approximately 10 µm and is such that at least approximately 80% by mass of the particles are of a size below 20 µm.

7. A machine according to Claim 6, in which the particle size of the slot-impregnating composition (8) is such that approximately at most 3% by mass of the particles are above 45µm in size.

8. A machine according to one of Claims 1 to 7, having windings heads (3) at the two axial ends of the magnetic circuit, the conductors in the windings heads being impregnated with a composition (6) for impregnating windings heads which contains a heat-setting resin and a filler (61) of larger particle size than the particle size of the filler of the slot-impregnating composition.

9. A machine according to Claim 8, in which the particle size of the filler of the composition for impregnating windings heads is such that it has approximately from 30 to 55% by mass of particles having a size between 500 µm and 1000 µm, has approximately from 25 to 45% by mass of particles having a size between 200 µm and 600 µm, with the remainder being composed of at least 5% by mass of particles whereof at least 80% by mass are below 25 µm in size and at most 3% by mass are above 50 µm in size.

10. A machine according to Claim 9, in which the particle size of the filler of the composition for impregnating windings heads is such that it has a remainder composed of at least 5% by mass of particles whereof at least 80% by mass are below 20 µm in size and at most 3% by mass are above 45 µm in size.

11. A machine according to one of Claims 1 to 10, in which the laminated magnetic circuit (1) is mounted inside a sheath (4) made from a metal material.

12. A process for manufacturing a stator of an electrical rotating machine, the said stator comprising a laminated magnetic circuit having a stack of magnetic metal sheets disposed substantially parallel to a plane perpendicular to the axis of rotation of the rotor of the machine, the magnetic circuit having a plurality of teeth, the teeth delimiting longitudinally oriented slots, comprising the following steps:
- installing electrically conductive wires in the slots and forming windings heads at the two axial ends of the magnetic circuit;
- installing on a vertical axis the assembly having the magnetic circuit supporting the conductors in the slots and the windings heads;
- impregnating under vacuum the conductors in the slots with a slot-impregnating composition comprising a heat-setting resin and a filler; and
- proceeding to polymerisation of the composition.

13. A process according to Claim 12, in which the step of impregnation of the conductors in the slots under vacuum allows impregnation of the conductors in the windings heads using the same impregnating composition.

14. A process for manufacturing a stator of an electrical rotating machine according to one of claims 12 or 13, comprising the following steps:
- After having installed along a vertical axis the assembly having the magnetic circuit supporting the conductors in the slots and the windings heads, and before impregnating under vacuum the wires in the slots;
- impregnating the first windings head, in an axially upper position, with a composition for impregnating windings heads, comprising a heat-setting resin and a filler of large particle size;
- turning around the said assembly and installing it once again on a vertical axis, so that the first windings head becomes the lower windings head;
- impregnating under vacuum the conductors in the slots with a slot-impregnating composition comprising a heat-setting resin and another filler of smaller particle size than the particle size of the filler of the first composition;
- impregnating the second windings head with a composition for impregnating windings heads, comprising a heat-setting resin and a filler of large particle size; and
- proceeding to polymerisation of the said compositions.

15. A process according to Claim 14, in which, before impregnation of the second windings head, a step of at least partial polymerisation of at least the slot-impregnating composition is performed.

16. A process according to one of Claims 12 to 15, for a stator of a machine whereof the rotor is mounted inside the stator, in which, before the first step of impregnation, the assembly comprising the magnetic circuit supporting the conductors in the slots and the windings heads is trapped between an outer sheath, forming part of the final motor, and a removable inner core substantially occupying the volume to be reserved for the rotor.

17. A process according to one of Claims 12 to 16, in which, during the impregnation of the conductors in the slots, the total quantity of slot-impregnating composition is introduced under vacuum successively in portions, and after each portion the stator is returned to atmospheric pressure.

18. A process according to one of Claims 12 to 16, in which, during the impregnation of the conductors in the slots, the total quantity of slot-impregnating composition is introduced under vacuum successively in portions, and after each portion the stator is subjected to a pressure higher than atmospheric pressure.

## Patentansprüche

1. Rotierende elektrische Maschine, die einen Stator enthält, wobei der Stator einen geblechten Magnetkreis (1) enthält, der einen Stapel von Magnetblechen aufweist, die im Wesentlichen parallel zu einer Ebene lotrecht zur Drehachse des Rotors der Maschine angeordnet sind, wobei der Magnetkreis mehrere Zähne aufweist, wobei die Zähne in Längsrichtung ausgerichtete Kerben begrenzen, wobei elektrische Leiterdrähte in den Kerben angeordnet sind, wobei das Verhältnis zwischen der Summe der Querschnitte der umschriebenen Quadrate, die um den Querschnitt jedes Leiterdrahts herum angezeichnet sind, zum Kerben-Nutzquerschnitt für jede Kerbe höher als 0,7 ist, wobei die Kerbendrähte durch eine Kerben-Imprägnierzusammensetzung (8) blockiert werden, die einen wärmehärtbaren Kunststoff und einen Füllstoff (81) mit einer solchen Korngrößenverteilung enthält, dass die mittlere Größe der Teilchen, aus denen er besteht, geringer als etwa 15 µm ist, und dass mindestens etwa 80 Masseprozent der Teilchen eine Größe kleiner als 25 µm haben, wobei die Kerben-Imprägnierzusammensetzung mindestens 65 Masseprozent des Füllstoffs aufweist.

2. Rotierende elektrische Maschine, die einen Stator enthält, wobei der Stator einen geblechten Magnetkreis (1) enthält, der einen Stapel von Magnetblechen aufweist, die im Wesentlichen parallel zu einer Ebene lotrecht zur Drehachse des Rotors der Maschine angeordnet sind, wobei der Magnetkreis mehrere Zähne aufweist, wobei die Zähne in Längsrichtung ausgerichtete Kerben begrenzen, wobei elektrische Leiterdrähte in den Kerben angeordnet sind, wobei das Verhältnis zwischen der Summe der Querschnitte der umschriebenen Quadrate, die um den Querschnitt jedes Leiterdrahts herum angezeichnet sind, zum Kerben-Nutzquerschnitt für jede Kerbe höher als 0,7 ist, wobei die Kerbendrähte durch eine Kerben-Imprägnierzusammensetzung (8) blockiert werden, die einen wärmehärtbaren Kunststoff und einen Füllstoff (81) mit einer solchen Korngrößenverteilung enthält, dass die maximale Größe der Teilchen, aus denen er besteht, kleiner als 0,045*φ ist, wobei φ der Durchmesser der in den Kerben angeordneten elektrischen Leiterdrähte (2) ist, wobei die Kerben-Imprägnierzusammensetzung mindestens 65 Masseprozent des Füllstoffs aufweist.

3. Maschine nach einem der Ansprüche 1 oder 2, bei der die Korngrößenverteilung des Füllstoffs (81) so ist, das höchstens 3 Masseprozent der Teilchen eine Größe von mehr als 50 µm haben.

4. Maschine nach einem der Ansprüche 1 bis 3, bei der die Kerben-Imprägnierzusammensetzung mindestens 70 Masseprozent des Füllstoffs aufweist.

5. Maschine nach einem der Ansprüche 1 bis 4, bei der der Füllstoff der Kerben-Imprägnierzusammensetzung aus der Gruppe ausgewählt wird, die aus Quarzmehl, Quarz, Aluminiumnitrid und Aluminiumoxid besteht.

6. Maschine nach einem der Ansprüche 1 bis 5, bei der die Korngrößenverteilung des Füllstoffs der Kerben-Imprägnierzusammensetzung (8) so ist, dass die mittlere Größe der Teilchen geringer als etwa 10 µm ist, und so ist, dass mindestens etwa 80 Masseprozent der Teilchen eine Größe von weniger als 20 µm haben.

7. Maschine nach Anspruch 6, bei der die Korngrößenverteilung des Füllstoffs der Kerben-Imprägnierzusammensetzung (8) so ist, dass in etwa nicht mehr als 3 Masseprozent der Teilchen eine Größe von mehr als 45 µm haben.

8. Maschine nach einem der Ansprüche 1 bis 7, die Wickelköpfe (3) an den zwei axialen Enden des Magnetkreises aufweist, wobei die Leiter in den Wickelköpfen mit einer Wickelkopf-Imprägnierzusammensetzung (6) imprägniert sind, die einen wärmehärtbaren Kunststoff und einen Füllstoff (61) mit einer Korngrößenverteilung enthält, die höher ist als die Korngrößenverteilung des Füllstoffs der Kerben-Imprägnierzusammensetzung.

9. Maschine nach Anspruch 8, bei der die Korngrößenverteilung des Füllstoffs der Wickelkopf-Imprägnierzusammensetzung so ist, dass sie etwa 30 bis 55 Masseprozent Teilchen aufweist, deren Größe zwischen 500 µm und 1000 µm liegt, etwa 25 bis 45 Masseprozent Teilchen aufweist, deren Größe zwischen 200 µm und 600 µm liegt, wobei der Rest aus mindestens 5 Masseprozent Teilchen besteht, von denen mindestens 80 Masseprozent eine Größe kleiner als 25 µm haben und höchstens 3 Masseprozent eine Größe größer als 50 µm haben.

10. Maschine nach Anspruch 9, bei der die Korngrößenverteilung des Füllstoffs der Wickelkopf-Imprägnierzusammensetzung so ist, dass sie einen Rest aufweist, der aus mindestens 5 Masseprozent Teilchen besteht, von denen mindestens 80 Masseprozent eine Größe kleiner als 20 µm haben und höchstens 3 Masseprozent eine Größe größer als 45 µm haben.

11. Maschine nach einem der Ansprüche 1 bis 10, bei der der geblechte Magnetkreis (1) in eine Hülse (4) montiert ist, die aus einem metallischen Werkstoff hergestellt ist.

12. Verfahren zur Herstellung eines Stators einer rotierenden elektrischen Maschine, wobei der Stator einen geblechten Magnetkreis enthält, der einen Stapel von Magnetblechen aufweist, die im Wesentlichen parallel zu einer Ebene lotrecht zur Drehachse des Rotors der Maschine angeordnet sind, wobei der Magnetkreis mehrere Zähne aufweist, wobei die Zähne in Längsrichtung ausgerichtete Kerben begrenzen, das die folgenden Schritte enthält:
- Einsetzen der elektrischen Leiterdrähte in die Kerben und Bilden von Wickelköpfen an den zwei axialen Enden des Magnetkreises;
- Einsetzen mit senkrechter Achse der den die Leiter in den Kerben und die Wickelköpfe tragenden Magnetkreis enthaltenden Einheit;
- Vakuumimprägnieren der Leiter in den Kerben mit einer Kerben-Imprägnierzusammensetzung, die einen wärmehärtbaren Kunststoff und einen Füllstoff enthält;
- Durchführen der Polymerisierung der Zusammensetzung.

13. Verfahren nach Anspruch 12, bei dem der Schritt des Vakuumimprägnierens der Leiter in den Kerben es ermöglicht, das Imprägnieren der Leiter in den Wickelköpfen mit der gleichen Imprägnierzusammensetzung durchzuführen.

14. Verfahren zur Herstellung eines Stators einer rotierenden elektrischen Maschine nach einem der Ansprüche 12 oder 13, das die folgenden Schritte enthält:
- nach dem Einsetzen mit senkrechter Achse der den die Leiter in den Kerben und die Wickelköpfe tragenden Magnetkreis enthaltenden Einheit und vor dem Vakuumimprägnieren der Leiter in den Kerben, Imprägnieren des ersten Wickelkopfs in der axial oberen Stellung mit einer Wickelkopf-Imprägnierzusammensetzung, die einen wärmehärtbaren Kunststoff und einen Füllstoff mit hoher Korngrößenverteilung aufweist;
- Umdrehen der Einheit und erneutes Einsetzen mit senkrechter Achse, wobei der erste Wickelkopf zum unteren Wickelkopf wird;
- Vakuumimprägnieren der Leiter in den Kerben mit einer Kerben-Imprägnierzusammensetzung, die einen wärmehärtbaren Kunststoff und einen anderen Füllstoff mit einer geringeren Korngrößenverteilung als die Korngrößenverteilung des Füllstoffs der ersten Zusammensetzung enthält;
- Imprägnieren des zweiten Wickelkopfs mit einer Wickelkopf-Imprägnierzusammensetzung, die einen wärmehärtbaren Kunststoff und einen Füllstoff mit hoher Korngrößenverteilung aufweist;
- Durchführen der Polymerisierung der Zusammensetzungen.

15. Verfahren nach Anspruch 14, bei dem vor dem Imprägnieren des zweiten Wickelkopfs ein Schritt der zumindest teilweisen Polymerisierung mindestens der Kerben-Imprägnierzusammensetzung durchgeführt wird.

16. Verfahren nach einem der Ansprüche 12 bis 15 für einen Stator einer Maschine, deren Rotor innerhalb des Stators montiert ist, bei dem die den die Leiter in den Kerben und die Wickelköpfe tragenden Magnetkreis aufweisende Einheit vor dem ersten Imprägnierschritt zwischen einer äußeren Hülse, die Teil des endgültigen Motors ist, und einem entfernbaren inneren Kern eingeschlossen ist, der im Wesentlichen das für den Rotor freizuhaltende Volumen einnimmt.

17. Verfahren nach einem der Ansprüche 12 bis 16, bei dem während des Vakuumimprägnierens der Leiter in den Kerben die Gesamtmenge der Kerben-Imprägnierzusammensetzung nacheinander in Teilmengen eingeführt wird, und nach jeder Teilmenge der Stator auf Atmosphärendruck zurückgebracht wird.

18. Verfahren nach einem der Ansprüche 12 bis 16, bei dem während des Vakuumimprägnierens der Leiter in den Kerben die Gesamtmenge der Kerben-Imprägnierzusammensetzung nacheinander in Teilmengen eingeführt wird, und nach jeder Teilmenge der Stator einem höheren Druck als dem Atmosphärendruck ausgesetzt wird.
